# EUROPEAN PATENT SPECIFICATION

(11) **EP 2 234 278 B1**
(45) Date of publication and mention of the grant of the patent: **30.11.2011**
(21) Application number: 09004166.6
(22) Date of filing: 24.03.2009
(51) Int. Cl.: H04B 1/38, H04B 1/16

(54) **Method for operating a communications accessory device**
Verfahren für den Betrieb einer Kommunikationszubehörvorrichtung
Procédé de fonctionnement d'un dispositif d'accessoire de communication

(43) Date of publication of application: 29.09.2010
(73) Proprietor: novero GmbH, 40468 Düsseldorf (DE)
(72) Inventor: Clauberg, Patrick, 44137 Dortmund (DE)
(74) Representative: Gesthuysen, von Rohr & Eggert

(56) References cited:
- WO-A-00/46930
- US-A- 5 444 306

## Description

The present invention relates to a method for operating a communications accessory device in a motor vehicle with the features of claim 1 and to a communications accessory device for a motor vehicle with the features of the generic part of claim 4.

Upon installation into a motor vehicle a communications accessory device, e.g. an aftermarket car kit, a car phone, or a car connected personal navigation device, has to be connected at least to a permanent power supply line of the motor vehicle's electrical supply and to an ignition sense line which is connected to the motor vehicle's ignition switch.

Communications accessory devices according to the invention can be integrated into a communications device like a mobile phone or can be, primarily, separate from such a communications device. They typically draw power from the vehicles electrical supply and supply power to the communications device.

When the vehicle is not operated the communications accessory device must consume as little power as possible in order not to drain the vehicle's battery excessively. Usually the communications accessory device can switch between an active mode and a sleep mode. In order to be able to switch from the sleep mode when the motor vehicle is not operated into the active mode as soon as the motor vehicle is operated the communications accessory device needs a permanent connection to the vehicle's electrical supply. This is done by a permanent power supply line connected to an input of this communications accessory device.

Usually the permanent power supply line input sees the full voltage of the vehicles electrical supply system, nowadays preferably 12 to 15 V. Usually the ground connection is made through the vehicles bodywork and not through a separate ground connecting line.

In order to note when operation of the motor vehicle starts the usual communications accessory device is connected to an ignition sense line from the ignition switch of the motor vehicle. As soon as the motor vehicle's ignition is switched on or at least the car key has been turned to a pre-start position the ignition sense line will see the full voltage of the vehicle's electrical supply system. This indicates to the communications accessory device that it is to start its active mode.

Within the framework of the present invention a "motor vehicle" is any motorized vehicle that has an electrical supply system. Primarily it may be a passenger car.

Within the framework of the invention a "communications accessory device" is any kind of professionally installed car device like a car kit, a car phone, a car connected personal navigation device or the like.

Within the framework of the present invention a "control logic" is any kind of electronic control device like a microprocessor or a group of microprocessors.

Within the framework of the present invention the term "HIGH" and "LOW" are relative to each other and can be exchanged for each other. They are used for the usual situation in a motor vehicle where the full voltage means the status "HIGH" and no voltage or just a residual voltage means the status "LOW". However, under specific circumstances this may be exactly opposite, too.

The installed communications accessory device is permanently connected to the power supply line but is in its sleep mode when there is no power on the ignition sense line. For easier installation of the communications accessory device adaptor systems are available. The installer often is unaware of incompatibilities of those adaptor systems.

In fact it is possible that the installer might inadvertently connect the ignition sense line input of the communications accessory device to a permanent power supply line and the permanent power supply line input to the ignition sense line. In this situation the communications accessory device and its associated communications device will see that the ignition of the motor vehicle is permanently on which will then lead to undesirable drainage of the motor vehicle's battery.

Moreover, improper installation will cause the communications accessory device to fail in its proper start-up and shut-down procedures etc. so it might be impossible to properly handle a language selection or other start-up function.

In the prior art forming the starting point of the invention (WO-A-00/46930) the correctness of an ignition sense line installation is checked by a combination of a wrong installation status flag and a suitable timer. If the timer expires before a second signal is received over the ignition sense line the wrong installation status flag is set to indicate an improper installation of the ignition sense line. The installed timer will usually be set to about 12 hrs. This long timing is necessary to avoid an erroneous setting of the wrong installation status flag. However, there is still a slight possibility that the installed timer may expire even when the ignition sense line is properly installed, e.g. when the motor vehicle is a long-haul truck that operates for more then 12 hrs, continuously.

A further downside of the prior art method is that proper ignition sense line installation is not checked at the very beginning, namely immediately after installation of the communications accessory device and while the motor vehicle is still at the repair shop.

So there is a need for a method for a communications accessory device in a motor vehicle to determine immediately upon its installation whether the ignition sense line has been correctly installed. Likewise, the same problem is presented for a communications accessory device as such.

Above object is solved for a method with the features of the generic part of claim 1 by the features of the characterizing part of claim 1.

Preferred modifications and improvements of the method of claim 1 are the subject matter of claims 2 and 3.

Likewise, the communications accessory device with the features of the generic part claim 4 solves above mentioned problem by additionally providing the features of the characterizing part of claim 4.

Likewise, here further improvements and modifications are the subject matter of the dependent claims 5 and 6.

The essential aspect of the invention is that the method comprises the following steps:
Individually detecting the power supply status of the power supply line input and of the ignition sense line input and, in response thereto, at least setting a wrong installation status flag when a power supply status "LOW" of the power supply line input is detected while a power supply status "HIGH" of the ignition sense line input is detected.

Following the method according to the invention the detection of an improper installation is done based on the expected voltage levels at the two inputs. The following table shows what is to be expected.

| **Power line** | **Ignition line** | **interpretation** |
|---|---|---|
| LOW | LOW | Device not installed |
| HIGH | LOW | Normal, ignition OFF |
| LOW | HIGH | Installation wrong |
| HIGH | HIGH | Normal, ignition ON |

This simple system has the effect that the person installing the communications accessory device in a motor vehicle will be immediately alerted to a wrong installation of the ignition sense line. No harm is done, the installation is nearly foolproof.

In a preferred embodiment of the present invention the hardware provides for a visual indicator and/or an audio indicator and the method according to the invention further comprises operating the visual indicator and/or the audio indicator upon setting of the wrong installation status flag.

Finally, in an advanced version of the inventive method it is possible to provide the communications accessory device with an inverter switch or to have a separate inverter switch connected to the device at the inputs so that the control logic will operate the inverter switch to exchange the permanent power supply line input and the ignition sense line input in response to the wrong installation status flag being set.

The term "status flag" covers all kinds of indications or signals, either short, limited signals or permanent signals like a specific voltage level on a particular line.

A communications accessory device according to the invention solves above mentioned problem in the way explained above for the method. It implements the method steps in its control logic and associated hardware.

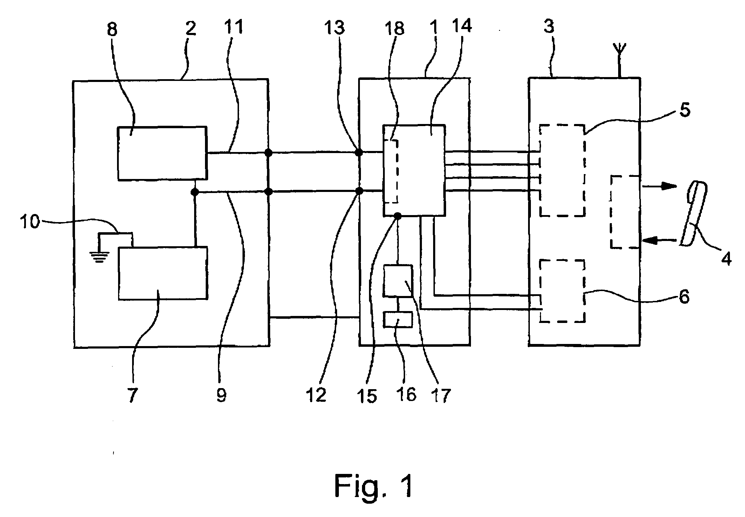

Hereafter the method according to the invention and the corresponding communications accessory device is explained with reference to the drawings. In the drawing the sole figure (Fig. 1) shows a simplified block diagram of a communications accessory device connected between the electrical supply circuit of a motor vehicle on the one hand and a wireless communications device like a mobile phone on the other hand.

In the sole figure of the drawings a communications accessory device 1 employing the present invention operates with a multi-state power management system to control its power consumption and the power consumption and operating status of an attached wireless communications device 3. Those devices arc operating in a motor vehicle 2 like a passenger car.

In the present embodiment a mobile phone is the illustrative example of the communications device 3, here with a headset 4 connected to the mobile phone 3 via a Bluetooth wireless connection.

It is possible to integrate the communications accessory device 1 with the communications device 3, e.g. for a car connected personal navigation device etc. In the present embodiment, however, the communications accessory device 1 provides a docking station for the communications device 3. Upon docking the communications device 3 to the communications accessory device 1 the processor 5 of the communications device 3 is connected to the communications accessory device 1 and the power supply 6 of the communications device 3 is also connected to the communications accessory device 1,

Just for purposes of better understanding the present invention the motor vehicle 2 is displayed with its components relevant for the invention, namely a battery 7 and an ignition 8 represented by an ignition switch. A power supply line 9 is indicated as well as a ground line 10 represented by a connection of the battery 7 to the bodywork of the motor vehicle 2. A further line indicates the ground-connection of the motor vehicle 2 with the communications accessory device 1.

Of course, the motor vehicle 2 further has all other components like an engine, an alternator etc. and of course the electrical supply system supplying electrical energy to all the components in the motor vehicle 2.

The ignition 8 causes the engine of the motor vehicle 2 to start and stop and is typically controlled by the user via a multi-position key switch, the ignition switch. For purposes of illustrating this invention the ignition 8 will be considered "OFF" when the key switch is in the off and start positions and will be considered "ON" in all other positions of the key switch, typically the engine run position and the preliminary accessory on position.

From the ignition 8 or the key switch of the ignition 8 an ignition sense line 11 extends to the communications accessory device 1. The power supply line 9 is connected to the permanent power supply line input 12 of the communications accessory device 1 while the ignition sense line 11 is connected to the ignition sense line input 13 of the communications accessory device 1.

The communications accessory device 1 further comprises a control logic 14 here indicated by a single microprocessor which of course may comprise other components also and may comprise more then one microprocessor. The control logic 14 is connected to both inputs 12, 13.

When not installed the power supply status 6 of both inputs is "LOW" and, when properly installed in a motor vehicle 2, the power supply status 6 of the permanent power supply line input 12 is permanently "HIGH". The power supply status of the ignition sense line input 13 is "HIGH" when the ignition of the motor vehicle 2 is "ON" and is "LOW" when the ignition 8 of the motor vehicle 2 is "OFF".

The essential aspect of the present invention is the fact that the control logic 14 is constructed and/or programmed to detect the power supply status 6 of the power supply line input 9 and of the ignition sense line input 11 and, in response thereto, sets at least a wrong installation status flag 15 when a power supply status 6 "LOW" of the powet supply line input 9 is detected while a power supply status 6 "HIGH" of the ignition sense line input 13 is detected. The wrong installation status flag 15 here is indicated as an output line of the control logic 14. It switches from "LOW" to "HIGH" when the control logic 14 detects a wrong installation of the ignition sense line 11, namely attachment of the ignition sense line 11 to the permanent power supply line input 12 and the power supply line 9 to the ignition sense line input 13.

In the present invention erroneous installation is not only detected and the wrong installation status flag 15 set (which might be evaluated electronically), but in addition the device 1 is provided with a visual indicator 16 and an audio indicator 17 so that upon setting of the wrong installation status flag 15 the visual indicator 16 and the audio indicator 17 are operated. The user is alerted by those signal means that the ignition sense line 11 was wrongly installed. Such mistake can be rectified immediately.

The sole figure of the drawing indicates an inverter switch 18 which may be used in a more sophisticated version of the communications accessory device 1, Such inverter switch 18 is operating the inputs 12, 13 in a way to exchange or switch over those inputs upon the wrong installation status flag 15 being set. The wrong installation is automatically rectified in this version of the communications accessory device 1.

## Claims

1. Method for operating a communications accessory device (1) for a motor vehicle (2) having an ignition variable between an "ON"-state and an "OFF"-state,
wherein the device (1) comprises a permanent power supply line input (12) and an ignition sense line input (13),
wherein the device (1) further comprises a control logic (14) directly or indirectly connected to both inputs, and
wherein, when not installed, the power supply status (6) of both inputs is "LOW" and, when properly installed in a motor vehicle (2) the power supply status (6) of the permanent power supply line input (12) is permanently "HIGH" and the power supply status of the ignition sense line input (13) is "HIGH" when the ignition of the motor vehicle (2) is "ON" and is "LOW" when the ignition (8) of the motor vehicle (2) is "OFF",
**characterized by**
the following method steps:
individually detecting the power supply status (6) of the power supply line input (9) and of the ignition sense line input (13) and, in response thereto,
at least setting a wrong installation status flag (15) when a power supply status (6) "LOW" of the power supply line input (9) is detected while a power supply status (6) "HIGH" of the ignition sense line input (1; 3) is detected.

2. The method of claim 1,
wherein the device (1) is provided with or connectable to a visual indicator (16) and/or an audio indicator (17),
the method comprising operating the visual indicator (16) and/or the audio indicator (17) upon setting of the wrong installation status flag (15).

3. The method of claim 1 or claim 2,
wherein the device (1) is provided with or connectable to an input inverter switch (18),
the method comprising exchanging the permanent power supply line input (9) and the ignition sense line input (13) upon setting of the wrong installation status flag (15).

4. Communications accessory device (1) for a motor vehicle (2) having an ignition (8) variable between an "ON"-state and an "OFF"-state,
wherein the device (1) comprises a permanent power supply line input (12) and an ignition sense line input (13),
wherein the device (1) further comprises a control logic (14) directly or indirectly connected to both inputs (12, 13), and
wherein, when not installed, the power supply status (6) of both inputs is "LOW" and, when properly installed in a motor vehicle (2) the power supply status (6) of the permanent power supply line input (12) is permanently "HIGH" and the power supply status (6) of the ignition sense line input (13) is "HIGH" when the ignition (8) of the motor vehicle (2) is "ON" and is "LOW" when the ignition (8) of the motor vehicle (2) is "OFF",
**characterized in that**
the control logic (14) is constructed and/or programmed to detect the power supply status (6) of the power supply line input (9) and of the ignition sense line input (11) and, in response thereto, set a wrong installation status flag (15) at least when a power supply status (6) "LOW" of the power supply line input (9) is detected while a power supply status (6) "HIGH" of the ignition sense line input (13) is detected.

5. Communications accessory device according to claim 4, **characterized in that**,
the device (1) is provided with or connectable to a visual indicator (16) and/or an audio indicator (17) and the visual indicator (16) and/or the audio indicator (17) are operated upon the wrong installation status flag (15) being set.

6. Communications accessory device according to claim 4 or 5, **characterized in that**
the device (1) is provided with or connectable to an input inverter switch (18) operative to exchange the permanent power supply line input (12) and the ignition sense line input (13) upon the wrong installation status flag (15) being set.

## Patentansprüche

1. Verfahren für den Betrieb einer Kommunikationzubehörvorrichtung (1) für ein Motorfahrzeug (2) mit einer Zündung, die zwischen einem "EIN"-Zustand und einem "AUS"-Zustand variabel ist,
wobei die Vorrichtung (1) einen Permanentstromversorgungsleitungseingang (12) und einen Zündungserfassungsleitungseingang (13) umfasst,
wobei die Vorrichtung (1) weiterhin eine Steuerlogik (14) umfasst, die direkt oder indirekt mit beiden Eingängen verbunden ist, und
wobei, wenn nicht installiert, der Stromversorgungsstatus (6) von beiden Eingängen "NIEDRIG" ist und, wenn ordnungsgemäß in einem Motorfahrzeug (2) installiert, der Stromversorgungsstatus (6) des Permanentstromversorgungsleitungseingangs (12) permanent "HOCH" ist und der Stromversorgungsstatus des Zündungserfassungsleitungseingangs (13) "HOCH" ist, wenn die Zündung des Motorfahrzeugs (2) "EIN" ist, und "NIEDRIG" ist, wenn die Zündung (8) des Motorfahrzeugs (2) "AUS" ist,
**gekennzeichnet durch**
die folgenden Verfahrensschritte:
individuelles Detektieren des Stromversorgungsstatus (6) des Stromversorgungsleitungseingangs (9) und des Zündungserfassungsleitungseingangs (13) und als Reaktion darauf
mindestens Einstellen eines Falschinstallationsstatusflags (15), wenn ein Stromversorgungsstatus (6) "NIEDRIG" des Stromversorgungsleitungseingangs (9) detektiert wird, während ein Stromversorgungsstatus (6) "HOCH" des Zündungserfassungsleitungseingangs (1;3) detektiert wird.

2. Verfahren nach Anspruch 1,
wobei die Vorrichtung (1) mit einem Sichtindikator (16) und/oder einem Audioindikator (17) ausgestattet ist oder mit diesem verbunden werden kann,
wobei das Verfahren das Betreiben des Sichtindikators (16) und/oder des Audioindikators (17) beim Setzen des Falschinstallationsstatusflags (15) umfasst.

3. Verfahren nach Anspruch 1 oder 2,
wobei die Vorrichtung (1) mit einem Eingangsinverterschalter (18) ausgestattet ist oder mit diesem verbunden werden kann,
wobei das Verfahren das Vertauschen des Permanentstromversorgungsleitungseingangs (9) und des Zündungserfassungsleitungseingangs (13) beim Setzen des Falschinstallationsstatusflags (15) umfasst.

4. Kommunikationszubehörvorrichtung (1) für ein Motorfahrzeug (2) mit einer Zündung (8), die zwischen einem "EIN"-Zustand und einem "AUS"-Zustand variabel ist,
wobei die Vorrichtung (1) einen Permanentstromversorgungsleitungseingang (12) und einen Zündungserfassungsleitungseingang (13) umfasst,
wobei die Vorrichtung (1) weiterhin eine Steuerlogik (14) umfasst, die direkt oder indirekt mit beiden Eingängen verbunden ist, und
wobei, wenn nicht installiert, der Stromversorgungsstatus (6) von beiden Eingängen "NIEDRIG" ist und, wenn ordnungsgemäß in einem Motorfahrzeug (2) installiert, der Stromversorgungsstatus (6) des Permanentstromversorgungsleitungseingangs (12) permanent "HOCH" ist und der Stromversorgungsstatus des Zündungserfassungsleitungseingangs (13) "HOCH" ist, wenn die Zündung (8) des Motorfahrzeugs (2) "EIN" ist, und "NIEDRIG'" ist, wenn die Zündung (8) des Motorfahrzeugs (2) "AUS" ist, **dadurch gekennzeichnet, dass**
die Steuerlogik (14) so konstruiert und/oder programmiert ist, dass sie den Stromversorgungsstatus (6) des Stromversorgungsleitungseingangs (9) und des Zündungserfassungsleitungseingangs (11) detektiert und als Reaktion darauf ein Falschinstallationsstatusflag (15) mindestens dann setzt, wenn ein Stromversorgungsstatus (6) "NIEDRIG" des Stromversorgungsleitungseingangs (9) detektiert wird, während ein Stromversorgungsstatus (6) "HOCH" des Zündungserfassungsleitungseingangs (13) detektiert wird.

5. Kommunikationszubehtirvorrichtung nach Anspruch 4, **dadurch gekennzeichnet, dass**
die Vorrichtung (1) mit einem Sichtindikator (16) und/oder einem Audioindikator (17) ausgestattet ist oder mit diesem verbunden werden kann und der Sichtindikator (16) und/oder der Audioindikator (17) betätigt werde können, wenn das Falschinstallationsstatusflag (15) gesetzt wird.

6. Kommunikationszubehörvorrichtung nach Anspruch 4 oder 5, **dadurch gekennzeichnet, dass**
die Vorrichtung (1) mit einem Eingangsinverterschalter (18) ausgestattet ist oder mit diesem verbunden werden kann, der dahingehend betätigt werden kann, den Permanentstromversorgungsleitungseingang (12) und den Zündungserfassungsleitungseingang (13) zu vertauschen, wenn das Falschinstallationsstatusflag (15) gesetzt wird.

## Revendications

1. Procédé pour faire fonctionner un dispositif accessoire de communications (1) pour un véhicule automobile (2) ayant un contact variable entre un état "ALLUMÉ" et un état "ÉTEINT",
dans lequel le dispositif (1) comprend une entrée de ligne d'alimentation électrique permanente (12) et une entrée de ligne de détection de contact (13),
dans lequel le dispositif (1) comprend en outre une logique de commande (14) connectée directement ou indirectement aux deux entrées, et
dans lequel, lorsque le dispositif n'est pas installé, l'état de l'alimentation électrique (6) des deux entrées est "BAS" et, lorsqu'il est installé correctement dans un véhicule automobile (2), l'état de l'alimentation électrique (6) de l'entrée de ligne d'alimentation électrique permanente (12) est "HAUT" de manière permanente et l'état de l'alimentation électrique de l'entrée de ligne de détection de contact (13) est "HAUT'" lorsque le contact du véhicule automobile (2) est "ALLUMÉ" et est "BAS" lorsque le contact (8) du véhicule automobile (2) est "ÉTEINT",
**caractérisé par**
les étapes suivantes du procédé :
la détection individuelle de l'état de l'alimentation électrique (6) de l'entrée de ligne d'alimentation électrique (9) et de l'entrée de ligne de détection de contact (13) et, en réponse à celle-ci,
au moins l'établissement d'un drapeau d'avertissement d'état d'installation incorrecte (15) lorsqu'un état d'alimentation électrique (6) "BAS" de l'entrée de ligne d'alimentation électrique (9) est détecté tandis qu'un état d'alimentation électrique (6) "HAUT" de l'entrée de ligne de détection de contact (1 ; 3) est détecté.

2. Procédé selon la revendication 1,
dans lequel le dispositif (1) est pourvu d'un indicateur visuel (16) et/ou d'un indicateur sonore (17), ou est connectable à ceux-ci,
ce procédé comprenant l'actionnement de l'indicateur visuel (16) et/ou de l'indicateur sonore (17) lors de l'établissement du drapeau d'avertissement d'état d'installation incorrecte (15).

3. Procédé selon la revendication 1 ou la revendication 2,
dans lequel le dispositif (1) est pourvu d'un commutateur inverseur d'entrée (18), ou est connectable à celui-ci,
ce procédé comprenant l'échange de l'entrée de ligne d'alimentation électrique permanente (9) et de l'entrée de ligne de détection de contact (13) lors de l'établissement du drapeau d'avertissement d'état d' installation incorrecte (15).

4. Dispositif accessoire de communications (1) pour un véhicule automobile (2) ayant un contact (8) variable entre un état "ALLUMÉ" et un état "ÉTEINT",
ce dispositif (1) comprenant une entrée de ligne d'alimentation électrique permanente (12) et une entrée de ligne de détection de contact (13),
ce dispositif (1) comprenant en outre une logique de commande (14) connectée directement ou indirectement aux deux entrées (12, 13), et
dans lequel, lorsque le dispositif n'est pas installé, l'état de l'alimentation électrique (6) des deux entrées est "BAS" et, lorsqu'il est installé correctement dans un véhicule automobile (2), l'état de l'alimentation électrique (6) de l'entrée de ligne d'alimentation électrique permanente (12) est "HAUT" de manière permanente et l'état de l'alimentation électrique (6) de l'entrée de ligne de détection de contact (13) est "HAUT" lorsque le contact (8) du véhicule automobile (2) est "ALLUMÉ" et est "BAS" lorsque le contact (8) du véhicule automobile (2) est "ÉTEINT",
**caractérisé en ce que**
la logique de commande (14) est construite et/ou programmée de façon à détecter l'état de l'alimentation électrique (6) de l'entrée de ligne d'alimentation électrique (9) et de l'entrée de ligne de détection de contact (11) et, en réponse à ceux-ci, de façon à établir un drapeau d'avertissement d'état d'installation incorrecte (15) au moins lorsqu'un état d'alimentation électrique (6) "BAS" de l'entrée de ligne d'alimentation électrique (9) est détecté tandis qu'un état d'alimentation électrique (6) "HAUT" de l'entrée de ligne de détection de contact (13) est détecté.

5. Dispositif accessoire de communications selon la revendication 4, **caractérisé en ce que**
ce dispositif (1) est pourvu d'un indicateur visuel (16) et/ou d'un indicateur sonore (17) ou est connectable à ceux-ci et **en ce que** l'indicateur visuel (16) et/ou l'indicateur sonore (17) sont actionnés lors de l'établissement du drapeau d'avertissement d'état d'installation incorrecte (15).

6. Dispositif accessoire de communications selon la revendication 4 ou 5, **caractérisé en ce que**
ce dispositif (1) est pourvu d'un commutateur inverseur d'entrée (18) ou est connectable à celui-ci, utilisé pour échanger l'entrée de ligne d'alimentation électrique permanente (12) et l'entrée de ligne de détection de contact (13) lors de l'établissement du drapeau d'avertissement d'état d'installation incorrecte (15).
